(19) **Europäisches Patentamt / European Patent Office / Office européen des brevets**

(11) **EP 1 239 573 B1**

(12) **EUROPEAN PATENT SPECIFICATION**

(45) Date of publication and mention
of the grant of the patent:
**26.05.2010 Bulletin 2010/21**

(51) Int Cl.:
*H02M 1/00* $^{(2007.01)}$

(21) Application number: **02250073.0**

(22) Date of filing: **07.01.2002**

(54) **Overvoltage-protective device for power system, AC/DC converter and DC/DC converter constituting the power system**

Überspannungsschutzsystem mit AC/DC und DC/DC Konvertern

Système de protection contre les surtensions comprenant des convertisseurs AC/DC et DC/DC

(84) Designated Contracting States:
**DE FR GB**

(30) Priority: **05.03.2001 JP 2001059681**

(43) Date of publication of application:
**11.09.2002 Bulletin 2002/37**

(73) Proprietor: **Fujitsu Microelectronics Limited
Tokyo 163-0722 (JP)**

(72) Inventors:
• **Nagaya, Yoshihiro,
c/o Fujitsu VLSI Limited
Kasugai-shi, Aichi 487-0013 (JP)**
• **Takimoto, Kyuichi,
c/o Fujitsu VLSI Limited
Kasugai-shi, Aichi 487-0013 (JP)**
• **Matsuyama, Toshiyuki,
c/o Fujitsu VLSI Limited
Kasugai-shi, Aichi 487-0013 (JP)**

(74) Representative: **Hitching, Peter Matthew et al
Haseltine Lake LLP
Lincoln House, 5th Floor
300 High Holborn
London
WC1V 7JH (GB)**

(56) References cited:
**EP-A- 0 445 501     EP-A- 0 915 560
EP-A- 0 987 806     DE-A- 3 525 942
US-A- 6 046 896**

• **PATENT ABSTRACTS OF JAPAN vol. 1998, no. 11, 30 September 1998 (1998-09-30) & JP 10 178779 A (FANUC LTD), 30 June 1998 (1998-06-30)**
• **PATENT ABSTRACTS OF JAPAN vol. 1995, no. 02, 31 March 1995 (1995-03-31) & JP 06 311739 A (FUJITSU LTD), 4 November 1994 (1994-11-04)**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

The present invention relates to overvoltage-protection in a power system that uses a DC/DC converter. More particularly, it relates to overvoltage-protection in a power system wherein direct-current (DC) power converted from alternating-current (AC) power is used as input power of a DC/DC converter.

For power systems used for various electric appliances of recent years such as desk-top type personal computers, computer game appliances and the like, there has been proposed an overvoltage-protective device that sets input power of a DC/DC converter into an overload-state and melts a fuse disposed on a current path of the input power with heat so as to stop supplying input power when direct-current (DC) power is in an overvoltage state. This is intended to secure safety of appliances.

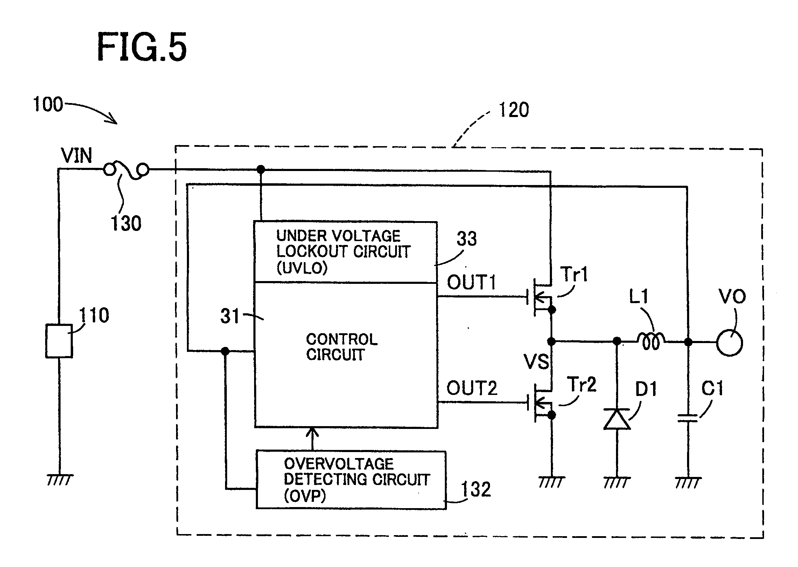

FIG. 5 shows a circuit diagram of an overvoltage-protective device for a power system 100 of the prior art. For various electric appliances of recent years such as desk-top type personal computers, computer game appliances and the like, for example, commercial alternating-current (AC) power (for example, 100 V, not shown) is inputted to an AC/DC converter 110 as input power, converted into direct current (DC) power VIN, outputted therefrom as output power, and finally inputted to a DC/DC converter 120 through a fuse 130 as output power.

The DC/DC converter 120 is a drop-voltage type converter constituted by circuits of a synchronous rectifying system. That is, an MOS transistor Tr1 as a main-side switching element and an MOS transistor Tr2 as a synchronous-side switching element are switched alternately, thereby to control output power VO to a predetermined voltage VO.

The MOS transistor Tr1 has a drain terminal connected to receive output power VIN from the AC/DC converter 110 and a source terminal connected to a drain terminal of the MOS transistor Tr2, a node VS being constituted by the junction between the source terminal of Tr1 and the drain terminal of Tr2. Furthermore, a source terminal of the MOS transistor Tr2 is connected to a ground potential. The node VS is connected to an output power terminal VO through a coil L1, as well as being connected to a cathode terminal of a diode D1 whose anode terminal is connected to a ground potential so as to supply the output power VO flyback current derived from back electromotive force of the coil L1 from the ground potential. A capacitor C1 for voltage smoothing is connected to the output power terminal VO.

From a control circuit 31, output signals OUT1 and OUT2 are outputted to gate terminals of the MOS transistors Tr1 and Tr2, respectively. In normal use, switching of the output signals OUT1 and OUT2 are made alternately based on a voltage of the output power terminal VO detected by the control circuit 31, thereby to control an output voltage to a predetermined voltage value. Furthermore, the output voltage VO is detected by an overvoltage detecting circuit 132. The overvoltage detecting circuit 132 detects an overvoltage state, wherein the output voltage VO exceeds the predetermined voltage value, and outputs an overvoltage detection signal to the control circuit 31. Upon receipt of the overvoltage detection signal, so as to lower voltage value of the output power VO, the control circuit 31 makes a control signal OUT1 low level to set the MOS transistor Tr1 to an OFF-state whilst making a control signal OUT2 high level to set the MOS transistor Tr2 to an ON-state. Thereby, a current path coming from an input power VIN for the output power VO is cut off and at the same time, the output voltage VO is lowered by connecting the output power terminal VO to a ground potential via the coil L1. There is thus constituted an overvoltage-protective device that can avoid supplying an overvoltage to electric devices such as a CPU.

Let us take a case that a line between the drain terminal and the source terminal of the MOS transistor Tr1 is short-circuited due to failure of the MOS transistor Tr1 or the like, which leads the output power VO to an overvoltage-state. In this case, a control signal OUT1 cannot control the MOS transistor Tr1. As a result, the input power VIN and the output power VO are directly connected through the coil L1, whereby the overvoltage detecting circuit 132 detects overvoltage-state at the control circuit 31. Then, a control signal OUT2 of a high level is outputted to keep the MOS transistor Tr2 in the ON-state. That is, there is formed a low-resistance current path running through to a ground potential from the input power terminal VIN via the MOS transistor Tr1 destroyed by short-circuiting and via the MOS transistor Tr2 that is conductive, and a large amount of current flows in the current path. The large amount of current melts the fuse 130 on the current path with heat, whereby the current path is cut off and the DC/DC converter is separated from the output power VIN from the AC/DC converter and the supply of input power VIN from there is stopped. The system described above prevents electric devices such as a CPU from being destroyed.

Furthermore, an under voltage lockout circuit 33 detects the input power VIN for the DC/DC converter. In the event that a voltage of the input power VIN becomes lower than a predetermined voltage value, the under voltage lockout circuit 33 sets the control signals OUT1 and OUT2 to a low-level so as to set the MOS transistors Tr1 and Tr2 into the OFF-state, thereby to prevent the DC/DC converter from operating in error during a low input voltage period. In the case that the fuse 130 has been melted with heat, supply of input power VIN to the DC/DC converter is stopped. Accordingly, the under voltage lockout circuit 33 sets the MOS transistors Tr1 and Tr2 to the OFF-state to cause the DC/DC converter to stop operating.

However, in the overvoltage-protective device for the power system 100 of FIG. 5, the fuse 130 must be inserted on the current path running between the AC/DC converter 110 and the DC/DC converter 120 as an overvoltage-protective device for protecting DC/DC converter from being destroyed due to short-circuiting at the drain terminal and the source terminal of the MOS transistor Tr1. As a result, the number of components increases and so does cost for components whereby a price-reduction of the power system cannot be achieved. Furthermore, a mounting region for the fuse 130 must be provided, and necessity to replace a fuse 130 with a new one, in case the fuse 130 is destroyed due to overvoltage-protective operation, must be assumed. Thus, a mounting arrangement is significantly limited. Still further, the protecting operation against overvoltage is accompanied by heat to melt the fuse 130 and the heat does harm to the mounting substrate.

EP-A-0987806 discloses a power system which may be considered to comprise: a DC/DC converter, and an overvoltage detecting circuit (32) for detecting when an output of the DC/DC converter is in an overvoltage state. The overvoltage detection circuit in this power system outputs a control signal which, which the overvoltage state is detected, breaks a connection that maintains a short-circuit transistor in an off state. At this time, the short-circuit transistor is controlled by a control circuit including an operational amplifier which compares the output voltage with a comparison voltage. When the output voltage is greater than the comparison voltage the control circuit causes the short-circuit transistor to conduct so that the output voltage is limited and a fuse on the input side of the DC/DC converter blows.. Thereafter, a capacitor connected across the output of the converter is discharged and the voltage across the capacitor falls below the comparison voltage. At this point the short-circuit transistor is turned off and the voltage across it rises until a discharge diode conducts and carries current away from an inductor to the battery source, preventing the capacitor voltage falling to a negative value.

In view of the above-described prior art deficiencies, it is desirable to provide overvoltage-protective circuitry capable of protecting a power system from overvoltage non-destructively without using a fuse.

According to a first aspect of the present invention there is provided an overvoltage-protection device for a power system comprising: an AC/DC converter; a DC/DC converter to which output power of the AC/DC converter is inputted as its input power; an overvoltage detecting circuit for detecting when an output of the DC/DC converter is in an overvoltage state; and an undervoltage lockout circuit operable to stop operation of the DC/DC converter in the event that an input voltage supplied to the DC/DC converter becomes lower than a predetermined voltage; characterised by: an alarm circuit operable, when the overvoltage state is detected by the overvoltage detecting circuit, to output an alarm signal; and a change circuit connected to the alarm circuit for receiving the alarm signal therefrom and operable, when the alarm signal is received, to change an output-power characteristic of the AC/DC converter so as to bring the overvoltage state in the DC/DC converter to an end; wherein the change circuit is operable to change the output-power characteristic by restricting an output-current-supply capability of the AC/DC converter.

In such a device, when the overvoltage detecting circuit detects that the output of the DC/DC converter is in an overvoltage-state, the alarm circuit outputs an alarm signal. Then, the change circuit changes an output-power characteristic of the AC/DC converter based on the alarm signal.

By changing output-power characteristics of the AC/DC converter based on an alarm signal that indicates the overvoltage detecting circuit has detected an overvoltage-state, an output-power capability of the AC/DC converter can be limited to the extent that the output for the DC/DC converter does not remain in the overvoltage-state. As a result, the overvoltage-state at the output of the DC/DC converter can be avoided. Accordingly, it is not necessary to insert a fuse on a current path that connects an output of the AC/DC converter and an input of the DC/DC converter. Thereby, there can be obtained merits as follows: (1) costs for components are reduced; (2) mounting regions for a fuse and the like are not required; and (3) limitations of mountings (replacement of fuses, damages to components caused by heat generated while melting a fuse, and the like) are avoided. That is, an overvoltage-protective function for a power system can be realised for sure with low cost and simple structure.

According to a second aspect of the present invention there is provided a method of providing a power system with overvoltage protection, the power system comprising an AC/DC converter and a DC/DC converter connected to the AC/DC converter so that an output power of the AC/DC converter provides input power to the DC/DC converter, the method comprising: detecting when an output of the DC/DC converter is in an overvoltage state; stopping the operation of the DC/DC converter when the input voltage supplied to the DC/DC converter becomes lower than a predetermined voltage, **characterised by**: producing an alarm signal when the overvoltage state is detected; and changing an output-power characteristic of the AC/DC converter when the alarm signal is produced so as to bring the overvoltage state in the DC/DC converter to an end by restricting an output-current supply capability of the AC/DC converter.

Reference will now be made, by way of example, to the accompanying drawings, in which:

FIG. 1 is a principle diagram of a power system embodying the present invention:
FIG. 2 is a circuit block diagram showing in more detail than FIG. 1 parts of the FIG. 1 power system in a First Example;
FIG. 3 is a diagram showing output characteristics of an AC/DC converter suitable for use in a power system according to the First Example and to a Second Example illustrated in FIG. 4;

FIG. 4 is a circuit diagram of a power system in a Second Example; and

FIG. 5 is a circuit diagram of a prior art power system. Preferred embodiments of a power system embodying the invention, and an AC/DC converter and a DC/DC converter for use in such a power system, will be explained in detail with reference to FIG. 1 through FIG. 4.

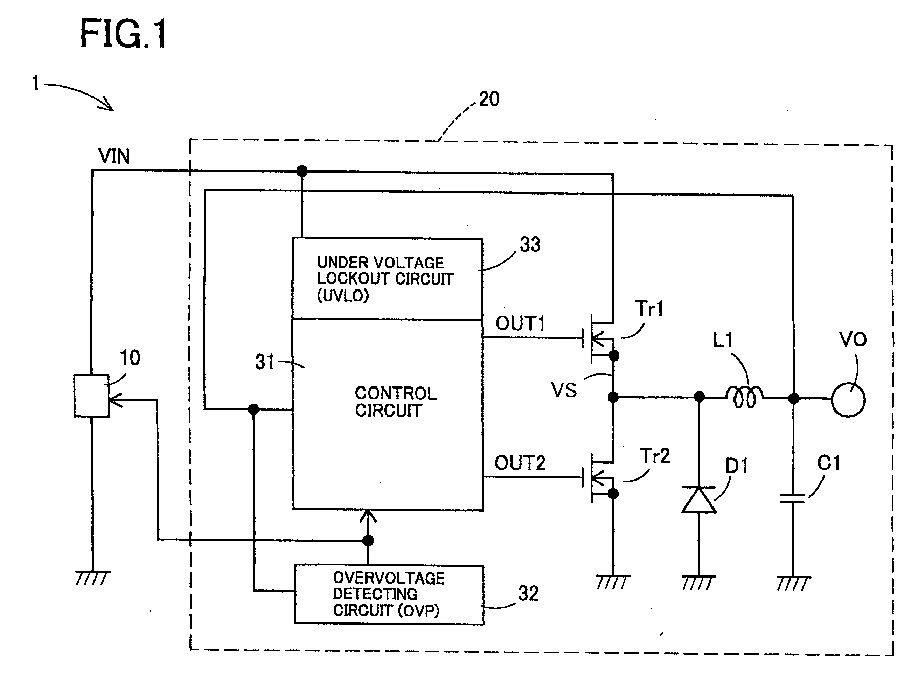

FIG. 1 is a principle diagram of a power system 1 directed to an embodiment of the present invention. Similar to the prior art power system 100 of FIG. 5, in the power system 1, a commercial alternating-current (AC) power (100V, for example, not shown) is inputted to an AC/DC converter 10 then, converted into direct-current (DC) power VIN, and finally inputted to a DC/DC converter 20 to obtain an output power VO. In FIG. 1, elements of the power system 1 which have the same numeral or notation as in the power supply system 100 are identical to those in the power supply system 100 in terms of structure, operational mechanism and effect. More specifically, in a DC/DC converter 20, a control circuit 31, an under voltage lockout circuit 33, an MOS transistor Tr1 as a main-side switching element and an MOS transistor Tr2 as a synchronous-side switching element (i.e. a synchronous rectifying system is adopted), a coil L1, a diode D1 and a capacitor C1 for voltage smoothing are identical to those in the power system 100 directed to the prior art.

Component elements different from those in the prior art are an AC/DC converter 10, and an overvoltage detecting circuit 32 in the DC/DC converter 20. That is, when the overvoltage detecting circuit 32 for detecting output power VO of the DC/DC converter 20 detects an overvoltage state due to short-circuiting or the like in the MOS transistor Tr1, the overvoltage detecting circuit 32 outputs an overvoltage detecting signal to the control circuit 31 to set the MOS transistor Tr2 to an ON-state, similar to the prior art case. Furthermore, in the present invention, an alarm signal based on overvoltage detection is outputted externally from the DC/DC converter 20. The alarm signal outputted from the DC/DC converter 20 is received by the AC/DC converter 10 and then, an output-power characteristic of the output power VIN from the AC/DC converter 10 is changed. To be more specific, a power-supply capability of the output power VIN is lowered then. Accordingly, in the event that the AC/DC converter 10 is short-circuited to a ground potential via the MOS transistor Tr2 set to the ON-state based on overvoltage detection and via the MOS transistor Tr1 in short-circuited state, the AC/DC converter 10 cannot supply the short-circuit current. Therefore, a voltage of the AC/DC converter output-power VIN decreases. When the decreased voltage value becomes equal to an operation voltage of the under voltage lockout circuit 33 for the DC/DC converter 20, the DC/DC converter 20 stops operating. Accordingly, operation to protect the power system from overvoltage can be conducted without arranging a fuse on a current path that runs between the output power VIN for the AC/DC converter 10 and the DC/DC converter 20.

After the DC/DC converter 20 stops operating, the DC/DC converter 20 can resume normal operation if the overvoltage-state at the output power VO for the DC/DC converter 20 has ended (i.e. the converter 20 has shifted to a normal state). Otherwise the overvoltage-protective state is maintained and same circuit operation is repeated to keep the overvoltage-protective state.

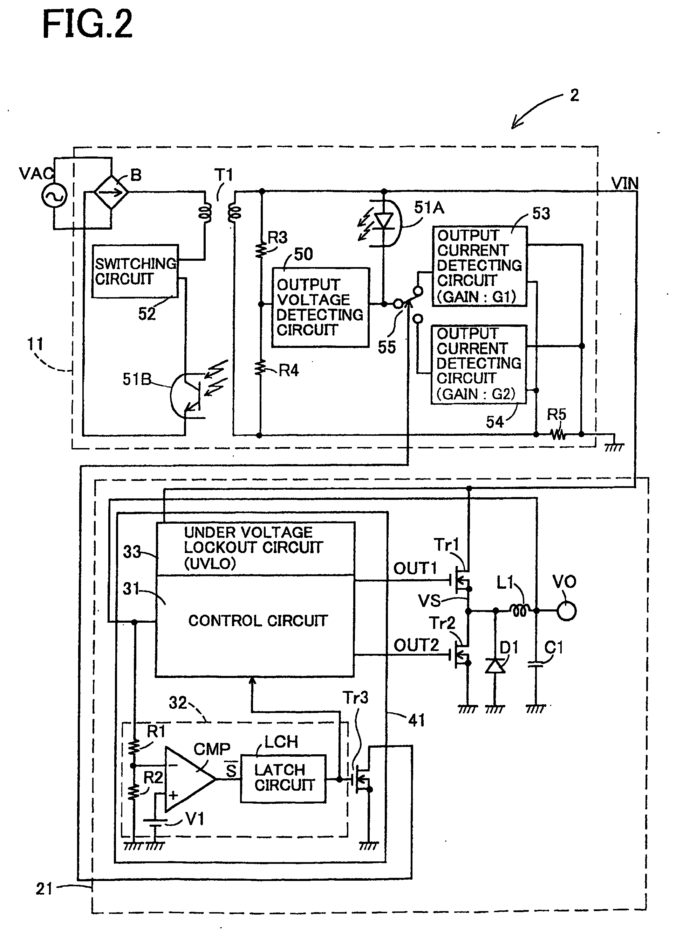

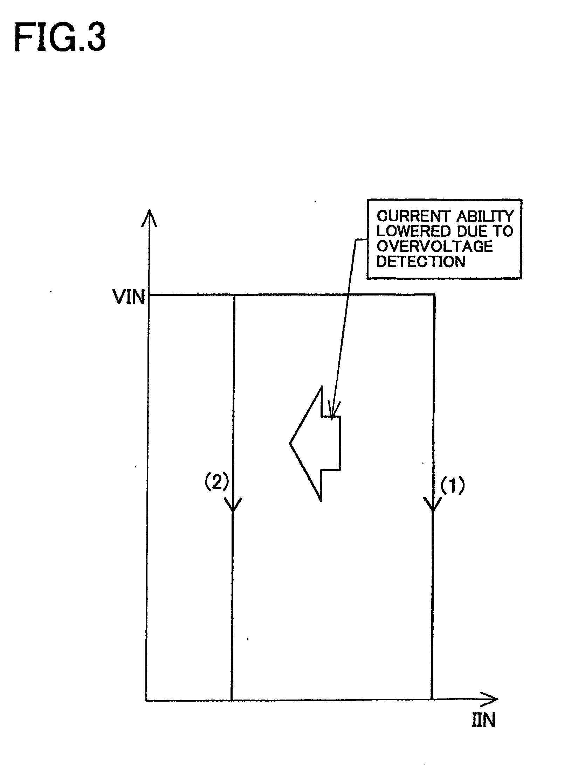

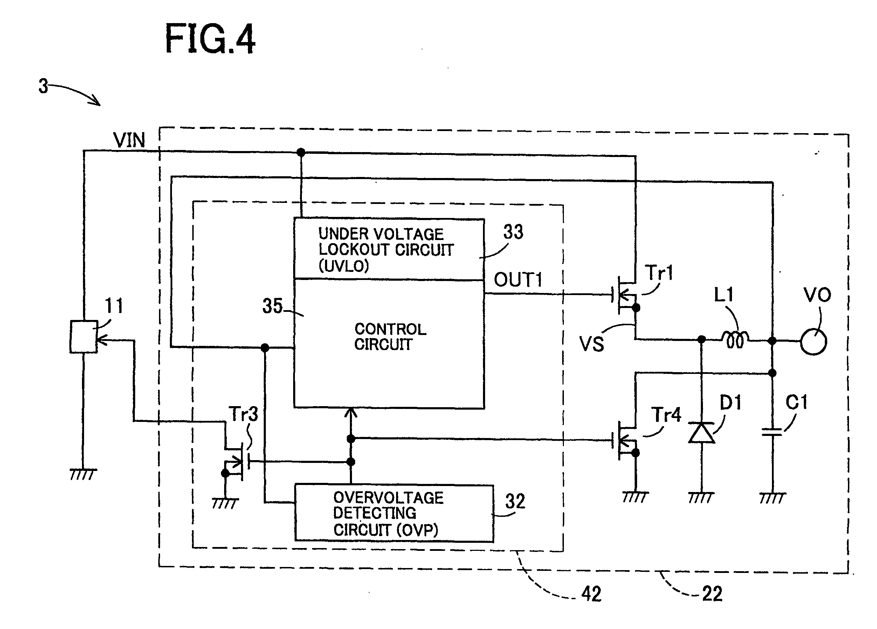

FIG. 2 shows parts of a power system directed to a First Example. FIG. 3 shows output characteristics of an AC/DC converter directed to the First Example and a Second Example. FIG. 4 shows parts of a power system directed to the Second Example.

FIG. 2 shows the power system 2 directed to the First Example. As to component elements similar to those of the prior art, same numerals or notations are assigned thereto. Since they work similarly, description of them will be omitted. The power system 2 is constituted by an AC/DC converter 11 and a DC/DC converter 21.

The AC/DC converter 11 switches outputs from a bridge circuit B using a switching circuit 52. The bridge circuit B receives alternating-current power VAC and the switching circuit 52 is controlled by a feedback circuit that controls an output-power voltage VIN using a photo-coupler 51A, 51B, or the like. An output from the bridge circuit B is inputted to a primary-side of a transformer T1 that converts power from alternating-current power VAC to direct-current power VIN. An output from a secondary-side of the transformer T1 is converted into output power VIN. However, a potential of the output power VIN is divided by resistances R3 and R4, and then detected by an output voltage detecting circuit 50 so as to regulate the output-power voltage at a predetermined voltage value. The detection output from the output voltage detecting circuit 50 is inputted to the photo-coupler 51A or the like in the afore-mentioned feedback circuit to feed the detection output back to the primary-side of the transformer T1, whereby the predetermined voltage value of the output power VIN is maintained.

A detection resistance R5 for detecting an output current value is inserted in the current path of the AC/DC converter 11. By detecting a voltage across the detection resistance R5, an output current value is detected. Thereby an output power supply capability is appropriately set. In the AC/DC converter 11, a pair of output current detecting circuits 53, 54 are connected in parallel. The output current detecting circuit 53 has a gain G1 and the output current detecting circuit 54 has a gain G2. The gains G1 and G2 have the relationship, for example, as below:

$$G1 \; < \; G2$$

Signals outputted from the output current detecting circuits 53, 54 are switched by switching circuit 55 appropriately and then, inputted to the output voltage detecting circuit 50 as well as the feedback circuit 51A. In case an output signal reaches a predetermined output signal determined by output current to be detected and gains, the output current detecting circuits 53, 54 control the output voltage detecting circuit 50 and the feedback circuit 51A so as to restrict power-conversion efficiency of the AC/DC converter 11. Thereby, output power supply capability of the AC/DC converter 11 is determined. That is, when the output current detecting circuit 53 having the smaller gain G1 is made conductive by the switching circuit 55, an output current value necessary for the output current detecting circuit 53 to reach the predetermined output signal is larger. Accordingly, output power supply capability of the AC/DC converter 11 is enhanced. On the other hand, when the output current detecting circuit 54 having the larger gain G2 is made conductive by the switching circuit 55, an output current value necessary for the output current detecting circuit 54 to reach the predetermined output signal is smaller. Accordingly, output power supply capability of the AC/DC converter is restrained.

An overvoltage detecting circuit 32 for the DC/DC converter 21 is constituted by voltage-divider resistances R1 and R2 for generating a divided voltage based on the output-power voltage VO, a comparator circuit CMP for comparing the divided voltage with a reference voltage V1 and a latch circuit LCH. When the output power VO changes into an overvoltage-state, an output signal S from the comparator circuit CMP is inverted. The inverted output of the comparator circuit CMP is latched by the latch circuit LCH so that the DC/DC converter 21 can keep detecting overvoltage. The output from the latch circuit LCH is inputted to the control circuit 31 to set the MOS transistor Tr2 to the ON-state and let any overvoltage at the output terminal VO escape to ground potential. By making an open-drain-structured MOS transistor Tr3 ON-state, an alarm relating to the overvoltage-state at the output terminal VO is supplied externally of the DC/DC converter 21. The overvoltage detection state latched by the latch circuit LCH is maintained until power supply to the latch circuit LCH is exhausted, i.e., until the under voltage lockout circuit 33 detects lowering of input power VIN to be supplied to the DC/DC converter 21 and the DC/DC converter 21 stops operating. It should be noted that the control circuit 31, the under voltage lockout circuit 33 and the overvoltage detecting circuit 32 constitute a semiconductor integrated circuit 41 for the DC/DC converter 21, in general.

An alarm signal from the MOS transistor Tr3 (alarm circuit) that is a structural element of the DC/DC converter 21 is inputted to the switching circuit 55 (part of the change circuit) that is a structural element of the AC/DC converter 11. When the alarm signal stays at a high-level potential (i.e. not indicating the overvoltage state), the switching circuit 55 connects the output current detecting circuit 53 having the smaller gain G1 to the output voltage detecting circuit 50 and the feedback circuit 51A, thereby to set the output power supply capability to a high level. When the alarm signal is inverted to a low-level potential (indicating the overvoltage-state), the switching circuit 55 connects the output current detecting circuit 54 having the larger gain G2 to the output voltage detecting circuit 50 and the feedback circuit 51A, thereby to set the output power supply capability to a low level.

FIG. 3 shows output characteristics of the AC/DC converter 11. (1) shows output characteristics for a large output power supply capability state. In this state, the alarm signal stays at the high-level potential (not indicating the overvoltage-state) and the output current detecting circuit 53 having the smaller gain G1 is connected to the output voltage detecting circuit 50 and the feedback circuit 51A. (2) shows output characteristics for a small output power supply capability state. In this state the alarm signal is inverted to the low-level potential (indicating the overvoltage-state) and the output current detecting circuit 54 having the larger gain G2 is connected to the output voltage detecting circuit 50 and the feedback circuit 51A.

In the First Example, the switching circuit 55 changes output power characteristics of the AC/DC converter 11 appropriately based on an alarm signal from the overvoltage detecting circuit 32 that works as overvoltage detecting means so as to restrict power capability for the AC/DC converter 11 to the extent that the overvoltage-state of the output power VO cannot be maintained. As a result, overvoltage of the output power VO for the DC/DC converter 21 can be avoided and it is not necessary to insert a fuse on a current path running from an output of the AC/DC converter 11 to an input of the DC/DC converter 21. Thereby, there can be obtained merits as follows: (1) costs for components are reduced; (2) mounting regions for a fuse and the like are not required; and (3) limitations of mountings (replacement of fuses, damages to components caused by heat generated while melting a fuse, and the like) are avoided. That is, an overvoltage-protective device for the power system 2 can be realised for sure with low cost and simple structure.

Furthermore, in the overvoltage-protective device for the power system 2, the DC/DC converter 21 includes the overvoltage detecting circuit 32, the MOS transistor Tr3 that works as an alarm circuit for outputting the detection result as an alarm signal, and the AC/DC converter 11 includes the pair of output current detecting circuits (first output-current-supply-capability setting circuit and second output-current-supply-capability setting circuit) 53 and 54 that work as change circuits for changing output power characteristics. The MOS transistor Tr3 delivers an alarm signal to the AC/DC converter 11.

Accordingly, an overvoltage at the output-power terminal VO can be avoided by combining: the DC/DC converter 21 that outputs alarm signals indicating an overvoltage detection result; and the AC/DC converter 11 capable of changing output power characteristic by receiving alarm signals.

Furthermore, by appropriately changing an output current dropping characteristic, output-current-supply capability of the AC/DC converter can be restricted. More specifically, the output current dropping characteristic can be changed based on a detection result obtained by the overvoltage detecting circuit 32. Thereby, current supply to the DC/DC converter 21 can be restricted to the extent that the overvoltage-state at the output-power terminal VO is ended. As a result, the overvoltage-state at the output-power terminal VO can be avoided.

Furthermore, detection of the overvoltage-state at the output-power terminal VO of the DC/DC converter 21 can be kept by the latch circuit LCH that latches the overvoltage-state. Thereby, an overvoltage-protective operation to restrict power capability of the AC/DC converter 11 can be conducted stably so that output power characteristics of the AC/DC converter 11 can be changed in order that the overvoltage-state at the output-power terminal VO does not continue.

Furthermore, by setting a predetermined voltage required at the input-power terminal VIN of the DC/DC converter appropriately, it can be arranged that when the output power characteristic of the AC/DC converter is restricted the output voltage of the AC/DC converter 11 falls lower than the predetermined voltage required at the input-power terminal VIN. That is, the under voltage lockout circuit 33 works as a low-power-period erroneous-operation avoiding circuit while an overvoltage of the output power VO is detected. When the voltage at the input-power terminal VIN is lower than the predetermined voltage, the under voltage lockout circuit 33 works to stop the DC/DC converter 21, whereby operation of the DC/DC converter 21 stops. When the operation of the DC/DC converter stops, the overvoltage-state in the DC/DC converter 21 is reset. Along with the reset of the overvoltage-state, an alarm signal outputted by the MOS transistor Tr3 is also reset, the output power characteristic of the AC/DC converter 11 returns to original state, and the power system returns to the normal condition. In case an overvoltage-state is not cleared even after returning to normal, the power system can avoid the overvoltage-state by repeating the above-described circuit operation.

Still further, the DC/DC converter 21 of this embodiment adopts the synchronous rectifying system. Accordingly, output voltage VO for the DC/DC converter 21 can be connected to ground potential by making the MOS transistor Tr2, a synchronous-side switching element, conductive when detecting an overvoltage. Thereby, the overvoltage-protective operation can be conducted for sure.

In a Second Example shown in FIG. 4, a DC/DC converter 22 adopts an asynchronous rectifying system. That is, in the Second Example, there is employed the DC/DC converter 22 that adopts the asynchronous rectifying system, instead of the DC/DC converter 21 that adopts synchronous rectifying type. What is different from the First Example is addition of an MOS transistor Tr4 that shunts an output power VO to ground potential when detecting overvoltage of the output power for the DC/DC converter 22. An output of the overvoltage detecting circuit 32 is connected to a gate terminal of the MOS transistor Tr4. Thereby, the MOS transistor Tr4 is set to the ON-state and the output power VO is shunted to ground potential, which avoids the overvoltage-state. Except for the addition of the MOS transistor Tr4, other matters such as structural elements, operational mechanism, and effect of the Second Example are similar to those of the First Example.

The present invention is not confined to the foregoing First and Second Examples, but various modifications and alterations are possible within the scope of the invention as defined by the appended claims.

For example, the First and Second Examples describe the matter to switch a pair of output current detecting circuits 53 and 54 that have different gains so as to protect the power system from overvoltage. However, the present invention is not limited to this manner. An output current detecting circuit may be constituted by a gain variable amplifier or the like wherein gain varies continuously or gradually.

Furthermore, the First and Second Examples describe the manner to change output-power-supply capability characteristic by changing an output current dropping characteristic. However, the present invention is not limited to this manner. Other than dropping characteristic, output current characteristic may be changed to power consumption limiting characteristic or the like.

According to the present invention, there is provided overvoltage-protective circuitry capable of protecting a power system from overvoltage non-destructively without using a fuse.

**Claims**

1. An overvoltage-protection device for a power system comprising:

   an AC/DC converter (10; 11);
   a DC/DC converter (20; 22) to which output power of the AC/DC converter is inputted as its input power;
   an overvoltage detecting circuit (32) for detecting when an output of the DC/DC converter is in an overvoltage state; and
   an undervoltage lockout circuit (33) operable to stop operation of the DC/DC converter in the event that an input voltage supplied to the DC/DC converter becomes lower than a predetermined voltage;
   **characterised by**:

   an alarm circuit (Tr3) operable, when the overvoltage state is detected by the overvoltage detecting circuit, to output an alarm signal; and

a change circuit (53-55) connected to the alarm circuit for receiving the alarm signal therefrom and operable, when the alarm signal is received, to change an output-power characteristic of the AC/DC converter so as to bring the overvoltage state in the DC/DC converter to an end;

wherein the change circuit is operable to change the output-power characteristic by restricting an output-current-supply capability of the AC/DC converter.

2. An overvoltage-protection device according to claim 1, wherein the DC/DC converter comprises the overvoltage detecting circuit and the alarm circuit, and the AC/DC converter comprises the change circuit.

3. An overvoltage-protection device according to claim 1 or 2, wherein the output-current-supply capability of the AC/DC converter has output-current dropping characteristic.

4. An overvoltage-protection device according to any preceding claim, wherein the change circuit comprises:

a first output-current-supply-capability setting circuit (53) which, when selected, causes the AC/DC converter to have a first output-current-supply-capability;

a second output-current-supply-capability setting circuit (54) which, when selected, causes the AC/DC converter to have a second output-current-supply-capability different from the first output-current-supply capability; and

a switching circuit (55) for selecting one of the first output-current-supply-capability setting circuit and the second output-current-supply-capability setting circuit.

5. An overvoltage-protection device according to any preceding claim, wherein the overvoltage detecting circuit (32) includes a latch circuit (LCH) for latching a detection result when the overvoltage detecting circuit detects the overvoltage state.

6. An overvoltage-protection device according to any preceding claim, wherein the undervoltage lockout circuit (33) is installed in the DC/DC converter.

7. An overvoltage-protection device according to any preceding claim, wherein the DC/DC converter includes a switching element (Tr2; Tr4) operable to shunt an output power of the DC/DC converter to ground potential when the overvoltage detecting circuit detects the output of the DC/DC converter is in said overvoltage state.

8. An overvoltage-protection device according to claim 7, wherein the switching element includes an MOS transistor.

9. An overvoltage-protection device according to any preceding claim, wherein the DC/DC converter adopts a synchronous rectifying system and includes:

a main-side switching element (Tr1) arranged in a power supply path connecting an input-power terminal (VIN), at which said input power is received, and an output-power terminal (VO), at which output power of the DC/DC converter is delivered;

a synchronous-side switching element (Tr2) arranged in a further path connecting said output-power terminal to ground potential;

means (31) for setting the synchronous-side switching element to a conductive state when said overvoltage state of the output of the DC/DC converter is selected; and

means (33) for setting the main-side switching element and the synchronous-side switching element into a non-conductive state when it is detected that said input power of the DC/DC converter is at a low level.

10. An overvoltage-protection device according to claim 9, wherein the synchronous-side switching element (Tr2) includes an MOS transistor.

11. An overvoltage-protection device for a power system according to any preceding claim, wherein the DC/DC converter comprises:

a power input terminal (VIN) adapted to be connected to the AC/DC converter to receive therefrom output power of the AC/DC converter; and

a control signal output terminal adapted to be connected to the AC/DC converter to output thereto said external control signal;

wherein the overvoltage detecting circuit (32) and the alarm circuit (Tr3) are included in the DC/DC converter; and

wherein the alarm circuit (Tr3) is operable, when the overvoltage state is detected by the overvoltage detecting circuit, to cause said external control signal to be output from said control signal output terminal so that the AC/DC converter changes its said output-power characteristic to bring said overvoltage state in the DC/DC converter to an end.

12. An overvoltage-protection device according to claim 11, wherein the overvoltage detecting circuit (32) includes a latch circuit (LCH) for latching a detection result when the overvoltage detecting circuit detects the overvoltage state.

13. An overvoltage-protection device according to claim 11 or 12, wherein the DC/DC converter adopts an asynchronous rectifying system and includes a switching element (Tr4) operable to shunt an output power of the DC/DC converter to ground potential when the overvoltage detection circuit detects the output of the DC/DC converter is in said overvoltage state.

14. An overvoltage-protection device according to claim 11 or 12, wherein the DC/DC converter adopts a synchronous rectifying system and includes:

a main-side switching element (Tr1) arranged in a power supply path connecting said power input terminal (VIN) and an output-power terminal (VO) of the DC/DC converter at which output power of the DC/DC converter is delivered; a synchronous-side switching element (Tr2) arranged in a further path connecting the output-power terminal to ground potential; means (31) for setting the synchronous-side switching element to a conductive state when said overvoltage state of the output of the DC/DC converter is detected; and means (33) for setting the main-side switching element and the synchronous-side switching element into a non-conductive state when it is detected that an input power of the DC/DC converter is at a low level.

15. An overvoltage-protection device for a power system according to any preceding claim, wherein the AC/DC converter comprises a control signal input terminal adapted to be connected to the DC/DC converter to receive therefrom said control signal; wherein the change circuit (53-55) is included in the AC/DC converter; and wherein the change circuit (53-55) is operable, when said control signal is received at said control signal input terminal, to change an output-power characteristic of the AC/DC converter so as to bring said overvoltage state of the DC/DC converter to an end.

16. An overvoltage-protection device according to claim 15, wherein the output-current-supply capability of the AC/DC converter has output-current dropping characteristic.

17. An overvoltage-protection device according to claim 15 or 16, wherein the change circuit comprises:

a first output-current-supply-capability setting circuit (53) which, when selected, causes the AC/DC converter to have a first output-current-supply capability; a second output-current-supply-capability setting circuit (54) which, when selected, causes the AC/DC converter to have a second output-current-supply capability different from said first output-current-supply capability; and a switching circuit (55) for selecting one of the first output-current-supply-capability setting circuit and the second output-current-supply-capability setting circuit.

18. A method of providing a power system with overvoltage protection, the power system comprising an AC/DC converter (10; 11) and a DC/DC converter (20; 22) connected to the AC/DC converter so that an output power of the AC/DC converter provides input power to the DC/DC converter, the method comprising:

detecting when an output of the DC/DC converter is in an overvoltage state; stopping the operation of the DC/DC converter when the input voltage supplied to the DC/DC converter becomes lower than a predetermined voltage; **characterised by**:

producing an alarm signal when the overvoltage state is detected; and changing an output-power characteristic of the AC/DC converter when the alarm signal is produced so as to bring the overvoltage state in the DC/DC converter to end by restricting an output-current supply capability of the AC/DC converter.

**Patentansprüche**

1. Überspannungsschutzvorrichtung für ein Energiesystem mit:

einem AC/DC-Konverter (10; 11); einem DC/DC-Konverter (20; 22), dem die Ausgangsenergie des AC/DC-Konverters als seine Eingangsenergie eingegeben wird; einer Überspannungsdctektionsschaltung (32) zum Detektieren, wenn eine Ausgabe des DC/DC-Konverters in einem Überspannungszustand ist; und einer Unterspannungssperrschaltung (33), die betriebsfähig ist, um die Operation des DC/DC-Konverters zu stoppen, falls eine Eingangsspannung, die dem DC/DC-Konverter zugeführt wird, niedriger als eine vorbestimmte Spannung wird; **gekennzeichnet durch**:

eine Alarmschaltung (Tr3), die betriebsfähig ist, wenn der Überspannungszustand **durch** die Überspannungsdetektionsschaltung detektiert wird, um ein Alarmsignal auszugeben; und

eine Veränderungsschaltung (53-55), die mit der Alarmschaltung zum Empfangen des Alarmsignals von ihr verbunden ist und betriebsfähig ist, wenn das Alarmsignal empfangen wird, um eine Ausgangsenergiecharakteristik des AC/DC-Konverters zu verändern, um den Überspannungszustand in dem DC/DC-Konverter zu beenden;

bei der die Veränderungsschaltung betriebsfähig ist, um die Ausgangsenergiecharakteristik **durch** Beschränken eines Ausgangsstromzufuhrvermögens des AC/DC-Konverters zu verändern.

2. Überspannungsschutzvorrichtung nach Anspruch 1, bei der der DC/DC-Konverter die Überspannungsdetektionsschaltung und die Alarmschaltung umfasst und der AC/DC-Konverter die Veränderungsschaltung umfasst.

3. Überspannungsschutzvorrichtung nach Anspruch 1 oder 2, bei der das Ausgangsstromzufuhrvermogen des AC/DC-Konverters eine abfallende Ausgangsstromcharakteristik hat.

4. Uberspannungsschutzvorrichtung nach einem vorhergehenden Anspruch, bei der die Veränderungsschaltung umfasst:

eine Einstellschaltung des ersten Ausgangsstromzufuhrvermögens (53), die dann, wenn sie selektiert wird, bewirkt, dass der AC/DC-Konverter ein erstes Ausgangsstromzufuhrvermögen hat;

eine Einstellschaltung des zweiten Ausgangsstromzufuhrvermögens (54), die dann, wenn sie selektiert wird, bewirkt, dass der AC/DC-Konverter ein zweites Ausgangsstromzufuhrvermögen hat, das sich von dem ersten Ausgangsstromzufuhrvermögen unterscheidet; und

eine Schaltanordnung (55) zum Selektieren der Einstellschaltung des ersten Ausgangsstromzufuhrvermögens oder der Einstellschaltung des zweiten Ausgangsstromzufuhrvermögens.

5. Überspannungsschutzvorrichtung nach einem vorhergehenden Anspruch, bei der die Überspannungsdetektionsschaltung (32) eine Verriegelungsschaltung (LCH) enthält, zum Verriegeln eines Detektionsresultates, wenn die Überspannungsdetektionsschaltung den Überspannungszustand detektiert.

6. Überspannungsschutzvorrichtung nach einem vorhergehenden Anspruch, bei der die Ünterspannungssperrschaltung (33) in dem DC/DC-Konverter installiert ist.

7. Überspannungsschutzvorrichtung nach einem vorhergehenden Anspruch, bei der der DC/DC-Konverter ein Schaltelement (Tr2; Tr4) enthält, das betriebsfähig ist, um eine Ausgangsenergie des DC/DC-Konverters zum Erdpotential zu shunten, wenn die Überspannungsdetektionsschaltung detektiert, dass die Ausgabe des DC/DC-Konverters in dem Überspannungszustand ist.

8. Überspannungsschutzvorrichtung nach Anspruch 7, bei der das Schaltelement einen MOS-Transistor enthält.

9. Überspannungsschutzvorrichtung nach einem vorhergehenden Anspruch, bei der der DC/DC-Konverter ein Synchrongleichrichtungssystem einsetzt und enthält:

ein Hauptseiten-Schaltelement (Tr1), das in einem Energiezufuhrweg angeordnet ist, der einen Eingangsenergieanschluss (VIN), an dem die Eingangsenergie empfangen wird, und einen Ausgangsenergieanschluss (VO) verbindet, an dem die Ausgangsenergie des DC/DC-Konverters geliefert wird;

ein Synchronseiten-Schaltelement (Tr2), das in einem weiteren Weg angeordnet ist, der den Ausgangsenergieanschluss mit dem Erdpotential verbindet;

ein Mittel (31) zum Versetzen des Sychronseiten-Schaltelementes in einen leitenden Zustand, wenn der Überspannungszustand der Ausgabe des DC/DC-Konverters selektiert wird; und

ein Mittel (33) zum Versetzen des Hauptseiten-Schaltelementes und des Synchronseiten-Schaltelementes in einen nichtleitenden Zustand, wenn detektiert wird, dass die Eingangsenergie des DC/DC-Konverters auf einem niedrigen Pegel ist.

10. Überspannungsschutzvorrichtung nach Anspruch 9, bei der das Synchronseiten-Schaltelement (Tr2) einen MOS-Transistor enthält.

11. Überspannungsschutzvorrichtung für ein Energiesystem nach einem vorhergehenden Anspruch, bei dem der DC/DC-Konverter umfasst:

einen Energieeingangsanschluss (VIN), der dafür ausgelegt ist, um mit dem AC/DC-Konverter verbunden zu sein, um von ihm die Ausgangsenergie des AC/DC-Konverters zu empfangen;

und

einen Steuersignalausgangsanschluss, der dafür ausgelegt ist, um mit dem AC/DC-Konverter verbunden zu sein, um an ihn das externe Steuersignal auszugeben;

bei der die Überspannungsdetektionsschaltung (32) und die Alarmschaltung (Tr3) in dem DC/DC-Konverter enthalten sind; und

bei der die Alarmschaltung (Tr3) betriebsfähig ist, wenn der Überspannungszustand durch die Überspannungsdetektionsschaltung detektiert wird, um zu bewirken, dass das externe Steuersignal von dem Steuersignalausgangsanschluss ausgegeben wird, so dass der AC/DC-Konverter seine Ausgangsenergiecharakteristik verändert, um den Überspannungszustand in dem DC/DC-Konverter zu beenden.

12. Überspannungsschutzvorrichtung nach Anspruch 11, bei der die Überspannungsdetektionsschaltung (32) eine Verriegelungsschaltung (LCH) zum Verriegeln eines Detektionsrcsultates enthält, wenn die Überspannungsdetektionsschaltung den Überspannungszustand detektiert.

13. Überspannungsschutzvorrichtung nach Anspruch 11 oder 12, bei der der DC/DC-Konverter ein Asynchrongleichrichtungssystem einsetzt und ein Schaltelement (Tr4) enthält, das betriebsfähig ist, um eine Ausgangsenergie des DC/DC-Konverters zum Erdpotential zu shunten, wenn die Überspannungsdetektionsschaltung detektiert, dass die Ausgabe des DC/DC-Konverters in dem Uberspannungszustand ist.

14. Oberspannungsschutzvorrichtung nach Anspruch 11 oder 12, bei der der DC/DC-Konverter ein Synchrongleichrichtungssystem einsetzt und enthält:

ein Hauptseiten-Schaltelement (Tr1), das in einem Energiezufuhrweg angeordnet ist, der den Energieeingangsanschluss (VIN) und einen Ausgangsenergieanschluss (VO) des DC/DC-Konverters verbindet, an dem die Ausgangsenergie des DC/DC-Konverters geliefert wird;

ein Synchronseiten-Schaltelement (Tr2), das in einem weiteren Weg angeordnet ist, der den Ausgangsenergieanschluss mit dem Erdpotential verbindet;

ein Mittel (31) zum Versetzen des Sychronseiten-Schaltelementes in einen leitenden Zustand, wenn der Überspannungszustand der Ausgabe des DC/DC-Konverters detektiert wird; und

ein Mittel (33) zum Versetzen des Hauptseiten-Schaltelementes und des Synchronseiten-Schaltelementes in einen nichtleitenden Zustand, wenn detektiert wird, dass eine Eingangsenergie des DC/DC-Konverters auf einem niedrigen Pegel ist.

15. Überspannungsschutzvorrichtung für ein Energiesystem nach einem vorhergehenden Anspruch, bei der der AC/DC-Konverter einen Steuersignaleingangsanschluss umfasst, der dafür ausgelegt ist, um mit dem DC/DC-Konverter verbunden zu sein, um von ihm das Steuersignal zu empfangen;

bei der die Veränderungsschaltung (53-55) in dem AC/DC-Konverter enthalten ist; und

bei der die Veränderungsschaltung (53-55) betriebsfähig ist, wenn das Steuersignal an dem Steuersignaleingangsanschluss empfangen wird, um eine Ausgangsenergiecharakteristik des AC/DC-Konverters zu verändern, um den Überspannungszustand des DC/DC-Konverters zu beenden.

16. Überspannungsschutzvorrichtung nach Anspruch 15, bei der das Ausgangsstromzufuhrvermögen des AC/DC-Konverters eine abfallende Ausgangsstromcharakteristik hat.

17. Oberspannungsschutzvorrichtung nach Anspruch 15 oder 16, bei der die Veränderungsschaltung umfasst:

eine Einstellschaltung des ersten Ausgangsstromzufuhrvermögens (53), die dann, wenn sie selektiert wird, bewirkt, dass der AC/DC-Konverter ein erstes Ausgangsstromzufuhrvermögen hat;

eine Einstellschaltung des zweiten Ausgangsstromzufuhrvermögens (54), die dann, wenn sie selektiert wird, bewirkt, dass der AC/DC-Konverter ein zweites Ausgangsstromzufuhrvermögen hat, das sich von dem ersten Ausgangsstromzufuhrvermögen unterscheidet; und

eine Schaltanordnung (55) zum Selektieren der Einstellschaltung des ersten Ausgangsstromzufuhrvermögens oder der Einstellschaltung des zweiten Ausgangsstromzufuhrvermögens.

18. Verfahren zum Versehen eines Energiesystems mit einem Überspannungsschutz, welches Energiesystem einen AC/DC-Konverter (10; 11) und einen DC/DC-Konverter (20; 22) umfasst, der mit dem AC/DC-Konverter so verbunden ist, dass eine Ausgangsenergie des AC/DC-Konverters die Eingangsenergie für den DC/DC-Konverter vorsieht, welches Verfahren umfasst:

Detektieren, wenn eine Ausgabe des DC/DC-Konverters in einem Überspannungszustand ist;

Stoppen der Operation des DC/DC-Konverters, wenn die Eingangsspannung, die dem DC/DC-Konverter zugeführt wird, niedriger als eine vorbestimmte Spannung wird, **gekennzeichnet durch**:

Erzeugen eines Alarmsignals, wenn der Überspannungszustand detektiert wird; und

Verändern einer Ausgangsenergiecharakteristik des AC/DC-Konverters, wenn das Alarmsignal erzeugt wird, um den Überspannungszustand in dem DC/DC-Konverter zu beenden, indem ein Ausgangsstromzufuhrvermögen des AC/DC-Konverters beschränkt wird.

## Revendications

1. Dispositif de protection contre les surtensions pour un système d'alimentation comprenant :

un convertisseur alternatif/continu (10 ; 11) ;
un convertisseur continu/continu (20; ; 22) auquel la puissance de sortie du convertisseur alternatif/continu est appliquée en tant que puissance d'entrée ;
un circuit de détection de surtension (32) pour détecter quand une sortie du convertisseur continu/continu est dans un état de surtension ; et
un circuit de verrouillage de sous-tension (33) pouvant être utilisé pour arrêter le fonctionnement du convertisseur continu/continu dans le cas où une tension d'entrée appliquée au convertisseur continu/continu devient inférieure à une tension prédéterminée ;
**caractérisé par** :

un circuit d'alarme (Tr3) pouvant être utilisé, lorsque l'état de surtension est détecté par le circuit de détection de surtension, pour délivrer un signal d'alarme ; et
un circuit de modification (53 à 55) connecté au circuit d'alarme pour recevoir le signal d'alarme de celui-ci et pouvant être utilisé, lorsque le signal d'alarme est reçu, pour modifier une caractéristique de puissance de sortie du convertisseur alternatif/continu de manière à mettre fin à l'état de surtension dans le convertisseur continu/continu ;
dans lequel le circuit de modification peut être utilisé pour modifier la caractéristique de puissance de sortie en limitant une capacité de fourniture de courant de sortie du convertisseur alternatif/continu.

2. Dispositif de protection contre les surtensions selon la revendication 1, dans lequel le convertisseur continu/continu comprend le circuit de détection de surtension et le circuit d'alarme, et le convertisseur alternatif/continu comprend le circuit de modification.

3. Dispositif de protection contre les surtensions selon la revendication 1 ou 2, dans lequel la capacité de fourniture de courant de sortie du convertisseur alternatif/continu a une caractéristique de chute de courant de sortie.

4. Dispositif de protection contre les surtensions selon l'une quelconque des revendications précédentes, dans lequel le circuit de modification comprend :

un premier circuit de détermination de capacité de fourniture de courant de sortie (53) qui, lorsqu'il est sélectionné, amène le convertisseur alternatif/continu à avoir une première capacité de fourniture de courant de sortie ;
un deuxième circuit de détermination de capacité de fourniture de courant de sortie (54) qui, lorsqu'il est sélectionné, amène le convertisseur alternatif/continu à avoir une deuxième capacité de fourniture de courant de sortie différente de la première capacité de fourniture de courant de sortie ; et
un circuit de commutation (55) pour sélectionner l'un du premier circuit de détermination de capacité de fourniture de courant de sortie et du deuxième circuit de détermination de capacité de fourniture de courant de sortie.

5. Dispositif de protection contre les surtensions selon l'une quelconque des revendications précédentes, dans lequel le circuit de détection de surtension (32) comprend un circuit de bascule (LCH) pour verrouiller un résultat de détection lorsque le circuit de détection de surtension détecte l'état de surtension.

6. Dispositif de protection contre les surtensions selon l'une quelconque des revendications précédentes, dans lequel le circuit de verrouillage de sous-tension (33) est installé dans le convertisseur continu/continu.

7. Dispositif de protection contre les surtensions selon l'une quelconque des revendications précédentes, dans lequel le convertisseur continu/continu comprend un élément de commutation (Tr2 ; Tr4) pouvant être utilisé pour dériver une puissance de sortie du convertisseur continu/continu vers un potentiel de terre lorsque le circuit de détection de surtension détecte que la sortie du convertisseur continu/continu est dans ledit état de surtension.

8. Dispositif de protection contre les surtensions selon la revendication 7, dans lequel l'élément de commutation comprend un transistor MOS.

9. Dispositif de protection contre les surtensions selon l'une quelconque des revendications précédentes, dans lequel le convertisseur continu/continu adopte un système de redressement synchrone et comprend :

un élément de commutation de côté primaire (Tr1) agencé dans un trajet d'alimentation connectant une borne de puissance d'entrée (VIN), au niveau de laquelle ladite puissance d'entrée est reçue, et une borne de puissance de sortie (VO), au niveau de laquelle la puissance de sortie du convertisseur continu/continu est délivrée ;
un élément de commutation de côté synchrone (Tr2) agencé dans un autre trajet connectant ladite borne de puissance de sortie au potentiel de terre ;
des moyens (31) pour mettre l'élément de commutation de côté synchrone dans un état conducteur lorsque ledit état de surtension de la sortie du convertisseur continu/continu est sélectionné ; et
des moyens (33) pour mettre l'élément de commutation de côté primaire et l'élément de commutation de côté synchrone dans un état non conducteur lorsqu'il est détecté que ladite puissance d'entrée du convertisseur continu/continu est à un niveau bas.

10. Dispositif de protection contre les surtensions selon la revendication 9, dans lequel l'élément de commutation de côté synchrone (Tr2) comprend un transistor MOS.

11. Dispositif de protection contre les surtensions pour un système d'alimentation selon l'une quelconque des revendications précédentes, dans lequel le convertisseur continu/continu comprend :

une borne d'entrée de puissance (VIN) adaptée pour être connectée au convertisseur alternatif/continu pour recevoir de celui-ci une puissance de sortie du convertisseur alternatif/continu ; et
une borne de sortie de signal de commande adaptée pour être connectée au convertisseur alternatif/continu pour délivrer à celui-ci ledit signal de commande externe ;
dans lequel le circuit de détection de surtension (32) et le circuit d'alarme (Tr3) sont inclus dans le convertisseur continu/continu ; et
dans lequel le circuit d'alarme (Tr3) peut être utilisé, lorsque l'état de surtension est détecté par le circuit de détection de surtension, pour provoquer la sortie dudit signal de commande externe à partir de ladite borne de sortie de signal de commande de sorte que le convertisseur alternatif/continu modifie sa dite caractéristique de puissance de sortie pour mettre fin audit état de surtension dans le convertisseur continu/continu.

12. Dispositif de protection contre les surtensions selon la revendication 11, dans lequel le circuit de détection de surtension (32) comprend un circuit de bascule (LCH) pour verrouiller un résultat de détection lorsque le circuit de détection de surtension détecte l'état de surtension.

13. Dispositif de protection contre les surtensions selon la revendication 11 ou 12, dans lequel le convertisseur continu/continu adopte un système de redressement asynchrone et comprend un élément de commutation (Tr4) pouvant être utilisé pour dériver une puissance de sortie du convertisseur continu/continu vers le potentiel de terre lorsque le circuit de détection de surtension détecte que la sortie du convertisseur continu/continu est dans ledit état de surtension.

14. Dispositif de protection contre les surtensions selon la revendication 11 ou 12, dans lequel le convertisseur continu/continu adopte un système de redressement synchrone et comprend :

un élément de commutation de côté primaire (Tr1) agencé dans un trajet d'alimentation connectant ladite borne d'entrée de puissance (VIN) et une borne de puissance de sortie (VO) du convertisseur continu/continu au niveau de laquelle la puissance de sortie du convertisseur continu/continu est délivrée ;
un élément de commutation de côté synchrone (Tr2) agencé dans un autre trajet connectant la borne de puissance de sortie au potentiel de terre ;
des moyens (31) pour mettre l'élément de commutation de côté synchrone dans un état conducteur lorsque ledit état de surtension de la sortie du convertisseur continu/continu est détecté ; et
des moyens (33) pour mettre l'élément de commutation de côté primaire et l'élément de commutation de côté synchrone dans un état non conducteur lorsqu'il est détecté qu'une puissance d'entrée du convertisseur continu/continu est à un niveau bas.

15. Dispositif de protection contre les surtensions pour un système d'alimentation selon l'une quelconque des revendications précédentes, dans lequel le convertisseur alternatif/continu comprend une borne d'entrée de signal de commande adaptée pour être connectée au convertisseur continu/continu pour recevoir de celui-ci ledit signal de commande ;
dans lequel le circuit de modification (53 à 55) est inclus dans le convertisseur alternatif/continu ; et dans lequel le circuit de modification (53 à 55) peut utilisé, lorsque ledit signal de commande est reçu au niveau de ladite borne d'entrée de signal de commande, pour modifier une caractéristique de puissance de sortie du convertisseur alternatif/continu de manière à mettre fin audit état de surtension du convertisseur continu/continu.

**16.** Dispositif de protection contre les surtensions selon la revendication 15, dans lequel la capacité de fourniture de courant de sortie du convertisseur alternatif/continu a une caractéristique de chute de courant de sortie.

**17.** Dispositif de protection contre les surtensions selon la revendication 15 ou 16, dans lequel le circuit de modification comprend :

un premier circuit de détermination de capacité de fourniture de courant de sortie (53) qui, lorsqu'il est sélectionné, amène le convertisseur alternatif/continu à avoir une première capacité de fourniture de courant de sortie ;
un deuxième circuit de détermination de capacité de fourniture de courant de sortie (54) qui, lorsqu'il est sélectionné, amène le convertisseur alternatif/continu à avoir une deuxième capacité de fourniture de courant de sortie différente de ladite première capacité de fourniture de courant de sortie ; et
un circuit de commutation (55) pour sélectionner l'un du premier circuit de détermination de capacité de fourniture de courant de sortie et du deuxième circuit de détermination de capacité de fourniture de courant de sortie.

**18.** Procédé de réalisation d'un système d'alimentation avec une protection contre les surtensions, le système d'alimentation comprenant un convertisseur alternatif/continu (10 ; 11) et un convertisseur continu/continu (20 ; 22) connecté au convertisseur alternatif/continu de sorte qu'une puissance de sortie du convertisseur alternatif/continu fournisse la puissance d'entrée au convertisseur continu/continu, le procédé consistant à :

détecter quand une sortie du convertisseur continu/continu est dans un état de surtension ; arrêter le fonctionnement du convertisseur continu/continu lorsque la tension d'entrée appliquée au convertisseur continu/continu devient inférieure à une tension prédéterminée, **caractérisé par** les étapes consistant à :

produire un signal d'alarme lorsque l'état de surtension est détecté ; et
modifier une caractéristique de puissance de sortie du convertisseur alternatif/continu lorsque le signal d'alarme est produit de manière à mettre fin à l'état de surtension dans le convertisseur continu/continu en limitant une capacité de fourniture de courant de sortie du convertisseur alternatif/continu.

# FIG.1

EP 1 239 573 B1

# FIG.2

# FIG.3

# FIG.4

EP 1 239 573 B1

FIG.5

**EP 1 239 573 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0987806 A